# EUROPÄISCHE PATENTSCHRIFT

(11) **EP 3 415 351 B1**
(45) Veröffentlichungstag und Bekanntmachung des Hinweises auf die Patenterteilung: **14.06.2023**
(21) Anmeldenummer: 18174663.7
(22) Anmeldetag: 29.05.2018
(51) Int. Cl.: B60J 5/04

(54) **FAHRZEUG-TÜRSTRUKTUR MIT TÜRRUMPF UND FENSTERRAHMEN AUS DEMSELBEN GUSSBAUTEIL**
VEHICLE DOOR STRUCTURE WITH DOOR HULL AND WINDOW FRAME FROM THE SAME CAST COMPONENT
STRUCTURE DE PORTE DE VÉHICULE POURVUE DE ROULEAU DE PORTE ET CADRE DE FENÊTRE D'UN MÊME COMPOSANT COULÉ

(30) Priorität: 14.06.2017 DE 102017113086
(43) Veröffentlichungstag der Anmeldung: 19.12.2018
(73) Patentinhaber: MAN Truck & Bus SE, 80995 München (DE)
(72) Erfinder: Förster, Tim Benjamin, 85221 Dachau (DE)
(74) Vertreter: v. Bezold & Partner Patentanwälte - PartG mbB

(56) Entgegenhaltungen:
- AT-U1- 7 550
- DE-A1- 4 237 584
- DE-A1-102007 045 976
- DE-A1-102007 061 209
- DE-A1-102015 117 025
- US-A- 2 760 814
- US-A1- 2003 188 492

## Beschreibung

Die Erfindung betrifft eine Türstruktur für eine Fahrzeugtüre, insbesondere eine Nutzfahrzeugtüre, mit einem Fensterrahmen und einem Türrumpf.

Konventionelle Rohbautüren werden, sowohl im Bereich der Personenkraftwagen als auch im Bereich der Nutzfahrzeuge, üblicherweise in Blechschalenbauweise hergestellt, wobei in der Regel diverse Verstärkungsteile an ein Innenblech der Rohbautüre anmontiert werden (z.B. angeschweißt, angeschraubt, etc.). Bei der Blechschalenbauweise bildet das Innenblech oftmals die komplette, dem Fahrzeug zugewandte Kontur ab und umfasst insbesondere den Fensterrahmen und den Türrumpf sowie etwaige Dichtflächen. Geschlossen wird das Innenblech, inklusive den Verstärkungen, durch ein an das Innenblech anmontiertes Außenblech, wobei das Anmontieren z.B. mittels Widerstandspunktschweißen, Bördeln oder Kleben oder eine Kombination davon erfolgt. Das Außenblech bildet zusammen mit dem Innenblech, inklusive den Verstärkungen, den sogenannten Türrohbau. Eine Abwandlung von dieser Bauweise ist z.B. das Ersetzen bestimmter üblicherweise an montierter Verstärkungsteile durch sogenannte Tailored Blanks, wobei das Innenblech dadurch gezielt verstärkt ausgeführt ist, insbesondere dicker ausgeführt ist, z. B. an der Scharnierseite eine größere Blechdicke aufweist als auf der Schlossseite.

Dokument US 2 760 814 A offenbart eine Tür für geschlossene Automobilkarosserien, die aus einem integralen Hauptkörper und einem abnehmbaren inneren Formteil besteht. Der Hauptkörper ist als einteiliges Druckgussteil mit einem äußeren Blech ausgebildet. Das innere Formteil ist als einteiliges Druckgussteil ausgebildet, zusammen mit einer Stützstruktur für einen Fensterheber und einen Verriegelungsmechanismus.

Eine Aufgabe der Erfindung ist es, eine alternative und/oder verbesserte, vorzugsweise leichtgewichtige, Türstruktur für eine Fahrzeugtüre zu schaffen, insbesondere für eine Nutzfahrzeugtüre.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Türstruktur, insbesondere Gussbauteil, für eine Fahrzeugtüre, vorzugsweise eine Nutzfahrzeugtüre, z.B. eine Türe eines Lastkraftwagens oder eines Omnibusses. Die Türstruktur stellt insbesondere eine Leichtbau-Türstruktur dar.

Die Türstruktur umfasst einen zweckmäßig unteren Türrumpf und einen zweckmäßig darüber angeordneten Fensterrahmen.

Die Türstruktur zeichnet sich insbesondere dadurch aus, dass der Türrumpf und der Fensterrahmen zweckmäßig durch ein Gussverfahren aus zweckmäßig ein und demselben Gussbauteil ausgebildet sind, so dass vorzugsweise der Türrumpf und der Fensterrahmen ein durch ein Gussverfahren hergestelltes einstückig integrales Gussbauteil bilden und/oder nicht aneinander montiert sind.

Dadurch können vorzugsweise einzelne Montagetätigkeiten reduziert oder sogar gänzlich vermieden werden und alternativ oder ergänzend eine Türstruktur in Leichtbauweise realisiert werden. Die Türstruktur und zwar insbesondere das Gussbauteil ermöglicht somit insbesondere Gewichts- und Kostenvorteile.

Es ist möglich, dass das Gussbauteil ein Druckguss-Bauteil, ein Sandguss-Bauteil (vorzugsweise Niederdruck-Sandguss-Bauteil), ein Kokillenguss-Bauteil (vorzugsweise Niederdruck-Kokillenguss-Bauteil) und/oder ein Feinguss-Bauteil ist. Es versteht sich, dass das Gussverfahren dementsprechend vorzugsweise ein Druckgussverfahren, ein Sandguss-Verfahren, ein Kokillenguss-Verfahren und/oder ein Feinguss-Verfahren darstellen kann, z. B. in Niederdruck-Ausführung.

Die Türstruktur umfasst, zusätzlich zu dem Türrumpf und dem Fensterrahmen, zumindest ein weiteres Türelement, wobei der Türrumpf, der Fensterrahmen und das zumindest eine weitere Türelement aus demselben Gussbauteil ausgebildet sind, so dass z.B. der Türrumpf, der Fensterrahmen und das zumindest eine weitere Türelement ein durch ein Gussverfahren hergestelltes einstückig integrales Gussbauteil bilden und/oder nicht aneinander montiert sind.

Das zumindest eine weitere Türelement umfasst Verstärkungsstreben, nämlich eine Türrumpf-seitig ausgebildete obere Verstärkungsstrebe und untere Verstärkungsstrebe. Die zumindest eine Verstärkungsstrebe bildet vorzugsweise zumindest einen sogenannten Türspanner.

Die zumindest eine Verstärkungsstrebe erstreckt sich vorzugsweise von einem vorderen (insbesondere im Wesentlichen vertikalen) Türrumpfabschnitt zu einem (insbesondere im Wesentlichen vertikalen) hinteren Türrumpfabschnitt. Zumindest eine Verstärkungsstrebe umfasst zumindest eine im Wesentlichen Y- oder V-förmig ausgebildete Strebenform.

Die zumindest eine Verstärkungsstrebe ist vorzugsweise im Wesentlichen horizontal ausgerichtet.

Die zumindest eine Verstärkungsstrebe kann z. B. einen im Wesentlichen U-, Hut- oder Omega-förmigen Querschnitt aufweisen, vorzugsweise mit innen verlaufenden Verstärkungsrippen.

Die zumindest eine Verstärkungsstrebe, also insbesondere der zumindest eine Türspanner, dient vorzugsweise der Weiterleitung von Crashlasten und/oder der Versteifung der Türstruktur. Bei z. B. Nutzfahrzeugtüren sind vorzugsweise zwei Türspanner möglich, nämlich zweckmäßig ein oberer Türspanner und ein unterer Türspanner. Der obere Türspanner kann z. B. vorzugsweise im Wesentlichen horizontal ausgerichtet sein und/oder von einem oberen, vorderen Scharnierbereich zu einem hinteren höhenmäßig im Wesentlichen mittleren Bereich der Türstruktur verlaufen.

Aufgrund der großen Fläche insbesondere des Außenblechs kann bei z. B. Nutzfahrzeugtüren der untere Türspanner zweckmäßig sein. Dieser dient vorzugsweise einerseits als Element zur Türversteifung (wie der obere Türspanner), aber alternativ oder ergänzend auch als Beulversteifung für ein Außenblech. Das heißt, dass der untere Türspanner vorzugsweise zur Abstützung eines Außenblechs im unteren Bereich der Türstruktur dient, sodass ein Beulen des Außenblechs nach innen verhindert werden kann, z. B. wenn sich eine Person gegen das Außenblech stützt.

Das zumindest eine weitere Türelement umfasst zumindest eine Montageeinrichtung zur Montage zumindest eines Anbauteils.

Es ist möglich, dass zumindest eine Montageeinrichtung z.B. mit einer Anlagefläche, einer Befestigungskonstruktion (z. B. Anschraubfläche, insbesondere zumindest ein Anschraubdom, und/oder ein oder mehrere z. B. runde oder längliche Durchgangslöcher) und/oder Verstärkungsrippen ausgeführt ist. Es ist möglich, dass die Anlagefläche, die Befestigungskonstruktion und/oder die Verstärkungsrippen (zweckmäßig direkt) im Gussverfahren zur Herstellung des Gussbauteils ausgebildet werden und somit vorzugsweise ebenfalls einen einstückig integralen Teil des Gussbauteils bilden.

Allerdings können als Befestigungskonstruktion auch z. B. (Einniet-) Muttern, Metalldirektverschraubungen, Schweißverbindungen und/oder Nieten verwendet werden. Ferner sind z. B. eingegossene Bolzen, insbesondere Schraubbolzen, möglich.

Das zumindest eine Anbauteil kann z.B. einen Rückspiegel, einen vorzugsweise oberen und/oder unteren Türspanner, einen Aggregate-Träger, eine Türverlängerung, einen z.B. nach unten gerichteten Spiegel, ein Türscharnier und/oder ein Fensterführungsprofil umfassen.

Es ist ferner möglich, dass das zumindest eine weitere Türelement z.B. mehrere in einen Rahmen des Türrumpfs integrierte Verstärkungsrippen, mehrere in den Fensterrahmen integrierte Verstärkungsrippen und/oder mehrere in das zumindest eine weitere Türelement, insbesondere die zumindest eine Verstärkungsstrebe, integrierte Verstärkungsrippen umfasst.

Alternativ oder ergänzend kann das zumindest eine weitere Türelement zumindest eine z. B. im Wesentlichen umlaufende Verprägung und/oder zumindest einen z. B. im Wesentlichen umlaufenden Wulst vorzugsweise auf der Innenseite des Gussbauteils umfassen, vorzugsweise zur definierten Anlage an einer Fahrzeug-seitig angebrachten Dichtung. Die umlaufende Anordnung kann z. B. durch eine Vielzahl von nebeneinander ausgebildeten Prägungen und/oder Wulste realisiert werden, insbesondere zur Dichtigkeitsgewährleistung.

Alternativ oder ergänzend kann das zumindest eine weitere Türelement zumindest einen Steg zur Aufnahme eines Dichtprofils zur Abdichtung einer höhenverstellbaren Fensterscheibe aufweisen. Der Steg kann sich z. B. entlang des oberen Türspanners und des Fensterrahmens erstrecken.

Das zumindest eine weitere Türelement kann auch z. B. zumindest ein Fensterführungsprofil aufweisen. Alternativ oder ergänzend kann das zumindest eine weitere Türelement zumindest eine Türscharnierhälfte, insbesondere die der Außenseite des Gussbauteils zugewandte Türscharnierhälfte, umfassen. Das Türscharnier besteht in der Regel aus zwei Teilen (zwei Türscharnierhälften), die z. B. durch einen Bolzen oder ähnliches drehbar aneinander befestigt sind. Dabei kann die eine Türscharnierhälfte zweckmäßig Fahrzeug-seitig montiert werden und die andere Türscharnierhälfte kann zweckmäßig Tür-seitig montiert werden.

Damit kann z. B. gewährleistet werden, dass z.B. beim Ausbau der Türe die Fahrzeugseitige Türscharnierhälfte nicht demontiert werden muss.

Eine Montageeinrichtung, nämlich eine Montageeinrichtung zur Montage eines Rückspiegels, ist in die obere Verstärkungsstrebe integriert oder daran angeflanscht, z. B. in oder an einen vorderen Bereich der Verstärkungsstrebe.

Es ist möglich, dass das Gussbauteil ein Innenblech für die Fahrzeugtüre darstellt.

Der Türrumpf (insbesondere dessen Rahmen), der Fensterrahmen und/oder zumindest eine Verstärkungsstrebe können z. B. einen im Wesentlichen U-, Hut- oder Omega-förmigen Querschnitt aufweisen, vorzugsweise mit innen verlaufenden Verstärkungsrippen.

Es ist ebenfalls möglich, dass die Türstruktur ein Außenblech zum Schließen des Gussbauteils (insbesondere des Innenblechs) auf dessen Außenseite umfasst.

Es ist möglich, dass der Türrumpf, der Fensterrahmen, das Außenblech und/oder das zumindest eine weitere Türelement aus demselben Gussbauteil ausgebildet sind, so dass z.B. der Türrumpf, der Fensterrahmen, das zumindest eine weitere Türelement und/oder das Außenblech ein durch ein Gussverfahren hergestelltes (zweckmäßig einstückiges, insbesondere einstückig integrales) Gussbauteil bilden und/oder nicht aneinander montiert sind.

Somit ist es möglich, dass das Gussbauteil den zumindest nahezu kompletten Türrohbau bildet, also insbesondere samt Innenblech und Außenblech. Dies kann im Herstellungsprozess z. B. dadurch realisiert werden, dass sogenannte Kerne eine innere Rippenstruktur abbilden. Des Weiteren kann z. B. die Außenkontur von "Innenblech" und "Außenblech" mittels äußeren Formen abgebildet werden. Die inneren Kerne können dann zweckmäßig aus dem fertig gegossenen Gussbauteil entfernt werden, z. B. durch Rütteln zerstört werden, sodass der Formstoff herausrieseln kann.

Der Türrumpf kann z. B. einen vorzugsweise schrägen oder bogenförmigen Ausschnitt zur zumindest abschnittsweisen Aufnahme zumindest eines Fahrzeugrads, Radkastens (z. B. Kotflügel) und/oder Seitenanbauteils des Fahrzeugs umfassen.

Der Türrumpf, der Fensterahmen, das zumindest eine weitere Türelement und/oder das Außenblech können z. B. aus einer Aluminiumgusslegierung, einer Magnesiumlegierung und/oder einer Nichteisenlegierung hergestellt werden.

Im Rahmen der Erfindung ist es somit insbesondere möglich, dass der Türrumpf, der Fensterrahmen, das zumindest eine weitere Türelement und/oder das Außenblech aus demselben Gussbauteil ausgebildet sind, so dass z.B. der Türrumpf, der Fensterrahmen, vorzugsweise das zumindest eine weitere Türelement und/oder das Außenblech ein durch ein Gussverfahren hergestelltes einstückig integrales Gussbauteil darstellen und/oder durch das Gussverfahren einstückig integral miteinander verbunden sind und/oder nicht aneinander montiert sind.

Es ist folglich möglich, dass der Türrumpf, der Fensterrahmen, das zumindest eine weitere Türelement und/oder das Außenblech vorzugsweise direkt im Gießprozess in einem Durchgang hergestellt werden.

Die Türstruktur mit dem Fensterrahmen und dem Türrumpf (und optional dem zumindest einen weiteren Türelement und/oder dem Außenblech) kann somit vorzugsweise durch das Gussbauteil ausgebildet werden, wobei es dadurch ermöglicht wird, dass der Fensterrahmen und der Türrumpf (und optional das zumindest eine weitere Türelement und/oder das Außenblech) nicht aneinander montiert sind, sondern eben durch ein und dasselbe Gussbauteil ausgebildet werden.

Zu erwähnen ist noch, dass der Türrumpf zweckmäßig einen Rahmen umfassen kann, z. B. gebildet durch einen vorderen (z. B. im Wesentlichen vertikalen) Türrumpfabschnitt, einen hinteren (z. B. im Wesentlichen vertikalen) Türrumpfabschnitt und einen unteren (z. B. im Wesentlichen horizontalen oder zumindest leicht schrägen) Türrumpfabschnitt und vorzugsweise einen oberen Türrumpfabschnitt, der z. B. durch einen Türspanner gebildet werden kann.

Zu erwähnen ist außerdem, dass die zumindest eine Montageeinrichtung im Rahmen der Erfindung z. B. durch eine Anlagefläche ausgebildet sein kann, alternativ oder ergänzend aber auch durch eine Anschraubmöglichkeit. Die zumindest eine Montageeinrichtung kann ferner vorzugsweise mit Verstärkungsrippen versehen sein. Die Anlagefläche, die Anschraubmöglichkeit und/oder die Verstärkungsrippen werden vorzugsweise ebenfalls im Gussverfahren hergestellt, so dass die Anlagefläche, die Anschraubmöglichkeit und/oder die Verstärkungsrippen ebenfalls einstückig integraler Teil des Gussbauteils sein können.

Der Fensterrahmen und der Türrumpf und optional das zumindest eine weitere Türelement und/oder das Außenblech können folglich durch das Gussverfahren (insbesondere einstückig integral) in dem Gussbauteil integriert sein.

Die Fahrzeugtüre ist vorzugsweise eine Nutzfahrzeugtüre, z. B. eine Omnibus- oder Lastkraftwagentü re.

Die Erfindung ist nicht auf eine Türstruktur eingeschränkt, sondern umfasst auch ein Gussverfahren zur Herstellung einer Türstruktur wie hierin offenbart. Die Erfindung umfasst auch ein Kraftfahrzeug, vorzugsweise ein Nutzfahrzeug, wie etwa einen Lastkraftwagen oder einen Omnibus, mit zumindest einer Türstruktur wie hierin offenbart.

Die zuvor beschriebenen Ausführungsformen und Merkmale sind zweckmäßig miteinander kombinierbar. Weitere vorteilhafte Ausführungsformen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Vorderansicht einer Türstruktur aus einem Gussbauteil gemäß einer Ausführungsform der Erfindung,
- Figur 2: zeigt eine Rückansicht der in Figur 1 gezeigten Türkonstruktion,
- Figur 3: zeigt eine perspektivische Vorderansicht der Türstruktur gemäß den Figuren 1 und 2, und
- Figur 4: zeigt eine perspektivische Rückansicht der Türstruktur gemäß den Figuren 1 bis 3.

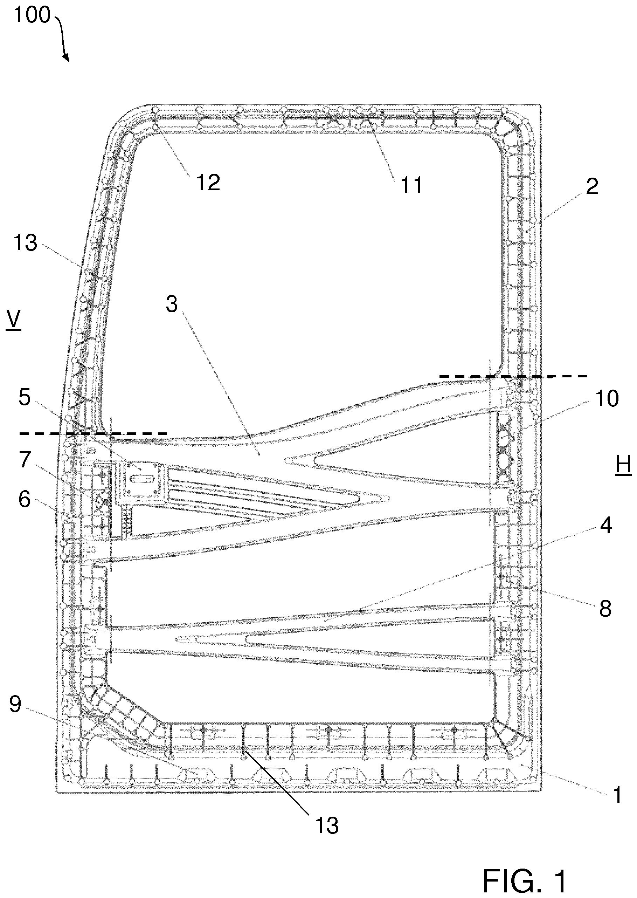

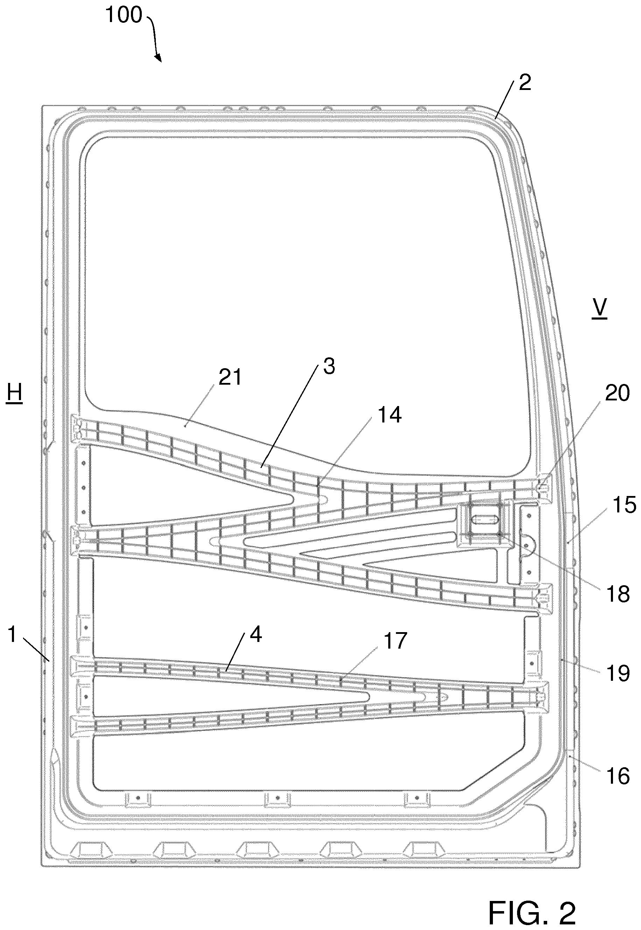

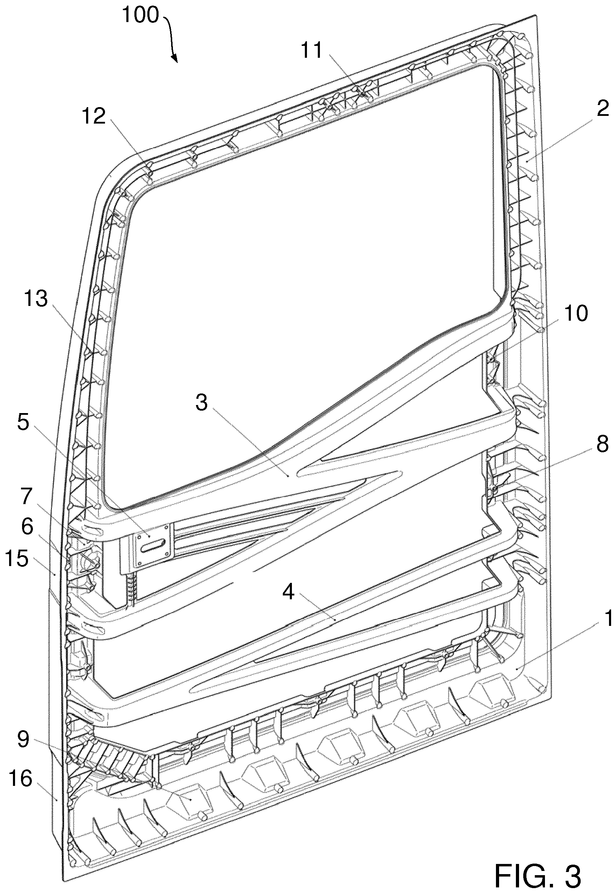

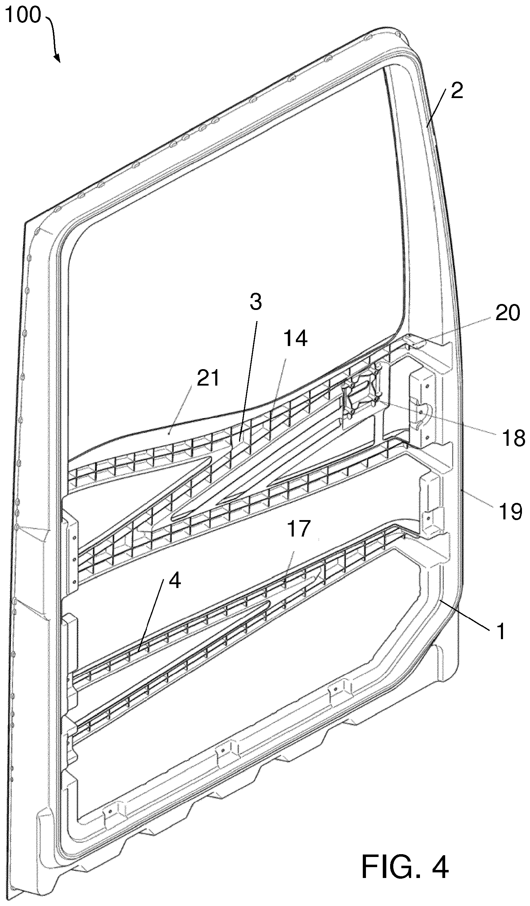

In den Figuren 1 bis 4 ist eine durch ein Gussbauteil 100 gebildete Türstruktur für eine Fahrzeugtüre, insbesondere eine Nutzfahrzeugtüre, dargestellt. Die Türstruktur wird nachfolgend unter gemeinsamer Bezugnahme auf die Figuren 1 bis 4 beschrieben, wobei die einzelnen Figuren 1 bis 4 der Übersichtlichkeit halber nicht mit allen Bezugszeichen versehen sind. Bezugszeichen V kennzeichnet einen vorderen Bereich der Türstruktur, wobei Bezugszeichen H einen hinteren Bereich der Türstruktur kennzeichnet.

Die Türstruktur umfasst einen unteren Türrumpf 1 und einen oberen Fensterrahmen 2. Die horizontal-gestrichelten Linien in Figur 1 kennzeichnen die Unterteilung des Türrumpfs 1 und des Fensterrahmens 2, wobei sich unter den horizontal-gestrichelten Linien der Türrumpf 1 erstreckt und über den horizontal-gestrichelten Linien der Fensterrahmen 2 erstreckt.

Der Türrumpf 1 umfasst einen Rahmen, der durch einen vorderen, z. B. im Wesentlichen vertikalen Türrumpfabschnitt, einen hinteren, z. B. im Wesentlichen vertikalen Türrumpfabschnitt, einen unteren, z. B. im Wesentlichen horizontalen Türrumpfabschnitt und einen oberen Türrumpfabschnitt gebildet wird. Der obere Türrumpfabschnitt kann zweckmäßig durch eine weiter unten erläuterte Verstärkungsstrebe 3 (Türspanner) ausgebildet werden.

Der Türrumpf 1 und der Fensterrahmen 2 sind aus ein und demselben Gussbauteil 100 ausgebildet, so dass der Türrumpf 1 und der Fensterrahmen 2 ein durch ein Gussverfahren hergestelltes einstückig integrales Gussbauteil 100 bilden und somit nicht aneinander montiert sind, z. B. nicht aneinandergeschraubt oder nicht aneinandergeschweißt sind. Das Gussbauteil 100 ist aus einer Aluminiumlegierung hergestellt und bildet ein Innenblech für die Fahrzeugtüre. Das ein Innenblech für die Fahrzeugtüre bildende Gussbauteil 100 ermöglicht insbesondere eine Leichtbau-Türstruktur, wobei zugleich üblicherweise erforderliche Montagetätigkeiten zur Montage verschiedener, separater Türelemente vermieden werden können.

Geeignete Gussverfahren sind insbesondere ein Druckguss-Verfahren, ein (Niederdruck-) Sandguss-Verfahren, ein (Niederdruck-) Kokillenguss-Verfahren oder ein Feinguss-Verfahren.

Die Türstruktur und somit das Gussbauteil 100 umfasst eine Vielzahl weiterer Türelemente, nämlich insbesondere:
- Das Gussbauteil 100 umfasst eine Türrumpf-seitig ausgebildete obere Verstärkungsstrebe 3 und untere Verstärkungsstrebe 4. Die obere Verstärkungsstrebe 3 und die untere Verstärkungsstrebe 4 sind im Wesentlichen horizontal ausgerichtet. Die obere Verstärkungsstrebe 3 umfasst zwei im Wesentlichen Y- oder V-förmig ausgebildete Strebenformen, wohingegen die untere Verstärkungsstrebe 4 nur eine im Wesentlichen Y- oder V-förmig ausgebildete Strebenform umfasst. Die obere Verstärkungsstrebe 3 bildet einen sogenannten oberen Türspanner, die untere Verstärkungsstrebe 4 einen unteren Türspanner. Der obere Türspanner 3 dient der Weiterleitung von Crashlasten und der Versteifung der Türstruktur. Der obere Türspanner 3 verläuft im Wesentlichen relativ horizontal von einem oberen vorderen Scharnierbereich zu einem hinteren im Wesentlichen mittleren Bereich der Türstruktur. Aufgrund der bei Nutzfahrzeugtüren großen Fläche eines Außenblechs zum Schließen der Türstruktur auf deren Außenseite des Gussbauteils 100 ist der untere Türspanner 4 vorgesehen. Dieser dient einerseits ebenfalls als Element zur Türversteifung, wie der obere Türspanner 3, aber auch als Beulversteifung des Außenblechs. Das heißt, der untere Türspanner 4 stützt das Außenblech im unteren Bereich ab, sodass dieses sich nicht nach innen beulen kann, z. B. wenn sich eine Person gegen das Außenblech stützt.
- Das Gussbauteil 100 umfasst eine Vielzahl von Montageeinrichtung 5, 6, 7, 8, 9, 10, 11, 12, 15, 16, 18, 20 zur Montage von Anbauteilen, wobei die jeweilige Montageeinrichtung mit einer Anlagefläche, einer Befestigungskonstruktion oder Verstärkungsrippen oder einer Kombination hiervon ausgeführt sein kann. Bezugszeichen 5 kennzeichnet eine Montageeinrichtung (z. B. Anschraubfläche) für einen Rückspiegel, wobei die Montageeinrichtung 5 in den vorderen Bereich des oberen Türspanners 3 integriert oder daran angeflanscht ist. Bezugszeichen 6 kennzeichnet eine Montageeinrichtung zur Montage eines Türscharniers, wobei die Montageinrichtung 6 mit einer Anschraubmöglichkeit (z. B. Anschraubdom) und Verstärkungsrippen versehen ist. Alternativ kann allerdings auch zumindest eine Türscharnierhälfte durch das Gussverfahren in das Gussbauteil 100 integriert sein. Bezugszeichen 7 kennzeichnet eine Montageeinrichtung für einen separat anmontierbaren inneren Türspanner, der z. B. aus Montagegründen erforderlich sein kann. Bezugszeichen 8 kennzeichnet eine Montageeinrichtung für einen Aggregate-Träger. Bezugszeichen 9 kennzeichnet eine Montageeinrichtung für eine Türverlängerung als Montageteil, wobei die Türverlängerung insbesondere bei Nutzfahrzeugtüren erforderlich sein kann. Bezugszeichen 10 kennzeichnet eine hintere Montageeinrichtung für den bereits erwähnten inneren anmontierbaren Türspanner. Bezugszeichen 11 kennzeichnet eine am Fensterrahmen 2 ausgebildete Montageeinrichtung für einen seitlichen nach unten gerichteten Spiegel. Bezugseichen 12 kennzeichnet eine obere am Fensterrahmen 2 ausgebildete Montageeinrichtung für einen Rückspiegel dar. Bezugszeichen 15 und 16 kennzeichnen Montageeinrichtungen für obere und untere Türscharniere. Bezugszeichen 18 kennzeichnet eine Montageeinrichtung, insbesondere einen Anschraubdom, auf der Innenseite der Montageeinrichtung 5, ebenfalls für den Rückspiegel. Bezugszeichen 20 kennzeichnet eine Montageeinrichtung für ein Fensterführungsprofil, wobei das Fensterführungsprofil alternativ auch durch das Gussverfahren in das Gussbauteil 100 integriert sein kann. Die zuvor erwähnten Montageeinrichtungen können zweckmäßig eine Anlagefläche, eine Anschraubmöglichkeit (z. B. einen oder mehrere Anschraubdome, Durchgangslöcher, etc.) und/oder Verstärkungsrippen umfassen, wobei die Anlagefläche, die Anschraubmöglichkeit und/oder die Verstärkungsrippen ebenfalls im Gussverfahren ausgebildet werden können und somit ebenfalls einstückig integraler Teil des Gussbauteils 100 sein können.
- Bezugszeichen 13 kennzeichnet allgemein im Gussbauteil 100 ausgebildete Verstärkungsrippen, wobei die Verstärkungsrippen 13 teilweise Montageeinrichtungen (z. B. Montageeinrichtungen 11 und 12) mit der umliegenden Geometrie des Gussbauteils 100 verbinden. Anbindungsstellen und/oder Knotenpunkte der Verstärkungsrippen 13 können verdickt sein, so dass diese z. B. als Anlageflächen für beim Gussverfahren, insbesondere Druckgussverfahren, meist erforderliche Auswerfer-Stifte dienen können. Die Verstärkungsrippen 13 sind einstückig integral durch das Gussverfahren in das Gussbauteil 100 integriert.
- Bezugszeichen 14 und 17 kennzeichnen ebenfalls Verstärkungsrippen, insbesondere auf der Innenseite des oberen Türspanners 3 und des unteren Türspanners 4.
- Bezugszeichen 19 kennzeichnet eine im Wesentlichen umlaufende Verprägung / Wulst, wobei die Verprägung / Wulst der definierten Anlage des Türrohbaus an einer am Fahrzeug angebrachten Dichtung dient.
- Bezugszeichen 21 kennzeichnet einen zweckmäßig innenliegenden, vorzugsweise im Wesentlichen umlaufenden Steg zur Aufnahme eines Dichtprofils zur Abdichtung einer höhenverstellbaren Fensterscheibe, wobei der Steg vorzugsweise entlang dem oberen Türspanners 3 und entlang dem Fensterrahmen 2 verläuft.
- Das Gussbauteil 100 kann auch zumindest ein Fensterführungsprofil umfassen.

Der Türrumpf 1, der Fensterrahmen 2 und zweckmäßig zumindest einige der weiteren Türelemente sind aus demselben Gussbauteil 100 ausgebildet, so dass der Türrumpf 1, der Fensterrahmen 2 und die weiteren Türelemente ein durch ein Gussverfahren hergestelltes zweckmäßig einstückig integrales Gussbauteil 100 bilden und folglich nicht aneinander montiert sind.

Einzelne Profilabschnitte des Türrumpfs 1, des Fensterrahmens 2 und der Verstärkungsstreben 3, 4 können zweckmäßig einen im Wesentlichen U-, Hut- oder Omega-förmigen Querschnitt aufweisen, vorzugsweise mit innen verlaufenden Verstärkungsrippen 13, 14, 17.

Bei einer nicht gezeigten Ausführungsform kann die Türstruktur ein Außenblech zum Schlie-ßen des ein Innenblech bildenden Gussbauteils 100 aufweisen. Das Außenblech dient zweckmäßig zum Schließen des Gussbauteils 100 auf der Außenseite des Gussbauteils 100. Bei dieser Ausführungsform kann der Türrumpf 1, der Fensterrahmen 2, die weiteren Türelemente und das Außenblech aus demselben Gussbauteil 100 ausgebildet sein, so dass letztgenannte Teile ein durch ein Gussverfahren hergestelltes zweckmäßig einstückig integrales Gussbauteil 100 bilden und folglich nicht aneinander montiert sind. Dadurch ist es möglich, dass das Gussbauteil 100 den quasi-kompletten Türrohbau bildet, also insbesondere samt Innenblech und Außenblech. Dies kann im Herstellungsprozess z. B. dadurch realisiert werden, dass sogenannte Kerne eine innere Rippenstruktur abbilden. Des Weiteren kann z. B. die Außenkontur von "Innenblech" und "Außenblech" mittels äußeren Formen abgebildet werden. Die inneren Kerne können dann zweckmäßig aus dem fertig gegossenen Gussbauteil 100 geholt werden, z. B. durch Rütteln zerstört werden, sodass der Formstoff herausriesein kann. Alternativ kann das Außenblech aber auch zur Montage an das Gussbauteil 100 ausgeführt sein und somit ein separates Außenblech bilden.

Bei einer ebenfalls nicht gezeigten Ausführungsform kann der Türrumpf 1 einen Ausschnitt (z. B. Aussparung, etc.) zur Aufnahme zumindest eines Fahrzeugrads, Radkastens und/oder Seitenanbauteils des Fahrzeugs umfassen, wobei der Ausschnitt vorzugsweise hinten unten oder vorne unten am Türrumpf 1 angeordnet ist. Das durch ein Gussverfahren hergestellte, insbesondere einstückig integrale, Gussbauteil 100 kann somit im Rahmen der Erfindung zweckmäßig den Türrumpf 1 und den Fensterrahmen 2 und vorzugsweise das zumindest eine weitere Türelement und/oder das Außenblech umfassen.

Der Türrumpf 1 und der Fensterrahmen 2 und optional das zumindest eine weitere Türelement und/oder das Außenblech können im Rahmen der Erfindung insbesondere in einem Gießprozess in einem Durchgang hergestellt und durch ein einziges Gussbauteil 100 ausgebildet werden.

Die Erfindung ist nicht auf die oben beschriebenen bevorzugten Ausführungsformen beschränkt.

### Bezugszeichenliste

- 1: Türrumpf
- 2: Fensterrahmen
- 3: Verstärkungsstrebe, z.B. Türspanner
- 4: Verstärkungsstrebe, z.B. Türspanner
- 5: Montageeinrichtung zur Montage eines Rückspiegels
- 6: Montageeinrichtung zur Montage eines Türscharniers
- 7: Montageeinrichtung zur Montage einer inneren Verstärkungsstrebe, z. B. Türspanner
- 8: Montageeinrichtung zur Montage eines Aggregate-Trägers
- 9: Montageeinrichtung zur Montage einer Türverlängerung
- 10: Montageeinrichtung zur Montage einer inneren Verstärkungsstrebe, z. B. Türspanner
- 11: Montageinrichtung für seitlich anzubringenden, nach unten gerichteten Spiegel
- 12: Montageeinrichtung zur Montage eines Rückspiegels
- 13: Verstärkungsrippen
- 14: Verstärkungsrippen
- 15: Montageeinrichtung zur Montage eines Türscharniers
- 16: Montageeinrichtung zur Montage eines Türscharniers
- 17: Verstärkungsrippen
- 18: Montageinrichtung zur Montage eines Rückspiegels
- 19: Vorzugsweise umlaufende Verprägung/Wulst
- 20: Montageeinrichtung zur Montage eines Fensterführungsprofils
- 21: Steg zur Aufnahme eines Dichtprofils
- 100: Gussbauteil, vorzugsweise Innenblech
- V: vorderer Bereich der Türstruktur / des Gussbauteils
- H: hinterer Bereich der Türstruktur / des Gussbauteils

## Patentansprüche

1. Türstruktur für eine Fahrzeugtüre, mit einem Türrumpf (1),einem Fensterrahmen (2) und zumindest einem weiteren Türelement, wobei der Türrumpf (1), der Fensterahmen (2) und das zumindest eine weitere Türelement aus demselben Gussbauteil (100) ausgebildet sind, wobei das zumindest eine weitere Türelement Verstärkungsstreben (3, 4) umfasst, nämlich eine Türrumpf-seitig ausgebildete obere Verstärkungsstrebe (3) und untere Verstärkungsstrebe (4), wobei zumindest eine Verstärkungsstrebe (3, 4) zumindest eine im Wesentlichen Y- oder V-förmig ausgebildete Strebenform umfasst, und wobei das zumindest eine weitere Türelement zumindest eine Montageeinrichtung (5, 6, 7, 8, 9, 10, 11, 12, 15, 16, 18, 20) zur Montage zumindest eines Anbauteils umfasst,
**dadurch gekennzeichnet, dass**
die Montageeinrichtung (5) zur Montage eines Rückspiegels in die obere Verstärkungsstrebe (3) integriert oder daran angeflanscht ist.

2. Türstruktur nach Anspruch 1, **dadurch gekennzeichnet, dass** das Gussbauteil (100) ein Druckguss-Bauteil, ein Sandguss-Bauteil, ein Kokillenguss-Bauteil und/oder ein Feinguss-Bauteil ist.

3. Türstruktur nach Anspruch 1 oder 2, **dadurch gekennzeichnet, dass** das zumindest eine weitere Türelement ferner zumindest eines von Folgendem umfasst:
- Die zumindest eine Montageeinrichtung (5, 6, 7, 8, 9, 10, 11, 12, 15, 16, 18, 20) zur Montage zumindest eines Anbauteils, wobei die Montageeinrichtung mit einer Anlagefläche, einer Befestigungskonstruktion und/oder Verstärkungsrippen ausgeführt ist,
- Mehrere in einen Rahmen des Türrumpfs (1) integrierte Verstärkungsrippen (13),
- Mehrere in den Fensterrahmen (2) integrierte Verstärkungsrippen (13),
- Mehrere in die zumindest eine Verstärkungsstrebe (3,4) integrierte Verstärkungsrippen (14, 17),
- Zumindest eine umlaufende Verprägung und/oder zumindest einen umlaufenden Wulst (19) auf der Innenseite des Gussbauteils (100), vorzugsweise zur definierten Anlage an einer Fahrzeug-seitig angebrachten Dichtung,
- Zumindest einen Steg zur Aufnahme eines Dichtprofils zur Abdichtung einer höhenverstellbaren Fensterscheibe,
- Zumindest ein Fensterführungsprofil,
- Zumindest eine Türscharnierhälfte.

4. Türstruktur nach Anspruch 3, **dadurch gekennzeichnet, dass** das zumindest eine Anbauteil einen Rückspiegel, ein Türscharnier, einen oberen und/oder unteren Türspanner, einen Aggregate-Träger, eine Türverlängerung, einen nach unten gerichteten Spiegel und/oder ein Fensterführungsprofil umfasst.

5. Türstruktur nach einem der vorhergehenden Ansprüche, **dadurch gekennzeichnet, dass** zumindest eine Verstärkungsstrebe (3, 4) im Wesentlichen horizontal ausgerichtet ist.

6. Türstruktur nach einem der vorhergehenden Ansprüche, **dadurch gekennzeichnet, dass** das Gussbauteil (100) ein Innenblech für die Fahrzeugtüre darstellt.

7. Türstruktur nach einem der vorhergehenden Ansprüche, **dadurch gekennzeichnet, dass** der Türrumpf (1), der Fensterrahmen (2) und/oder zumindest eine Verstärkungsstrebe (3, 4) einen im Wesentlichen U-, Hut- oder Omega-förmigen Querschnitt aufweist, vorzugsweise mit innen verlaufenden Verstärkungsrippen (13, 14, 17).

8. Türstruktur nach einem der vorhergehenden Ansprüche, **dadurch gekennzeichnet, dass** die Türstruktur ein Außenblech zum Schließen des Gussbauteils (100) auf dessen Aussenseite umfasst.

9. Türstruktur nach einem der vorhergehenden Ansprüche, **dadurch gekennzeichnet, dass** der Türrumpf (1), der Fensterahmen (2), das zumindest eine weitere Türelement und/oder das Außenblech aus demselben Gussbauteil (100) ausgebildet sind, so dass vorzugsweise der Türrumpf (1), der Fensterrahmen (2), das zumindest eine weitere Türelement und/oder das Außenblech ein durch ein Gussverfahren hergestelltes einstückiges Gussbauteil (100) bilden und/oder nicht aneinander montiert sind.

10. Türstruktur nach einem der vorhergehenden Ansprüche, **dadurch gekennzeichnet, dass** der Türrumpf (1), der Fensterahmen (2), das zumindest eine weitere Türelement und/oder das Außenblech aus einer Aluminiumgusslegierung, Magnesiumlegierung und/oder Nichteisenlegierung hergestellt sind.

11. Türstruktur nach einem der vorhergehenden Ansprüche, **dadurch gekennzeichnet, dass** die Fahrzeugtüre eine Nutzfahrzeugtüre, vorzugsweise Omnibus- oder Lastkraftwagentüre umfasst, und/oder der Türrumpf (1) einen Ausschnitt zur Aufnahme zumindest eines Fahrzeugrads, Radkastens und/oder Seitenanbauteils des Fahrzeugs umfasst.

12. Gussverfahren zur Herstellung einer Türstruktur nach einem der vorhergehenden Ansprüche.

13. Kraftfahrzeug, vorzugsweise Nutzfahrzeug, mit zumindest einer Türstruktur nach einem der Ansprüche 1 bis 11.

## Claims

1. Door structure for a vehicle door, having a door body (1), having a window frame (2) and having at least one further door element, wherein the door body (1), the window frame (2) and the at least one further door element are formed from the same cast component (100), wherein the at least one further door element comprises reinforcement struts (3, 4), specifically an upper reinforcement strut (3) and lower reinforcement strut (4) formed on the door-body side, wherein at least one reinforcement strut (3, 4) comprises at least one substantially Y-shaped or V-shaped strut form, and wherein the at least one further door element comprises at least one mounting device (5, 6, 7, 8, 9, 10, 11, 12, 15, 16, 18, 20) for mounting at least one attachment part,
**characterized in that**
the mounting device (5) for mounting a rear-view mirror is integrated into the upper reinforcement strut (3) or is flange-mounted thereon.

2. Door structure according to Claim 1, **characterized in that** the cast component (100) is a die-cast component, a sand-cast component, a permanent-mould-cast component and/or a precision-cast component.

3. Door structure according to Claim 1 or 2, **characterized in that** the at least one further door element furthermore comprises at least one of the following:
- the at least one mounting device (5, 6, 7, 8, 9, 10, 11, 12, 15, 16, 18, 20) for mounting at least one attachment part, wherein the mounting device is designed with an abutment surface, a fastening structure and/or reinforcement ribs,
- multiple reinforcement ribs (13) integrated into a frame of the door body (1),
- multiple reinforcement ribs (13) integrated into the window frame (2),
- multiple reinforcement ribs (14, 17) integrated into the at least one reinforcement strut (3, 4),
- at least one peripheral embossment and/or at least one peripheral bead (19) on the inner side of the cast component (100), preferably for defined abutment against a seal attached on the vehicle side,
- at least one web for receiving a sealing profile for sealing off a height-adjustable window pane,
- at least one window guide profile,
- at least one door-hinge half.

4. Door structure according to Claim 3, **characterized in that** the at least one attachment part comprises a rear-view mirror, a door hinge, an upper and/or lower door tensioner, an assembly support, a door extension, a downwardly directed mirror and/or a window guide profile.

5. Door structure according to one of the preceding claims, **characterized in that** at least one reinforcement strut (3, 4) is oriented substantially horizontally.

6. Door structure according to one of the preceding claims, **characterized in that** the cast component (100) constitutes an inner panel for the vehicle door.

7. Door structure according to one of the preceding claims, **characterized in that** the door body (1), the window frame (2) and/or at least one reinforcement strut (3, 4) have a substantially U-shaped, hat-shaped or omega-shaped cross section, preferably with internally running reinforcement ribs (13, 14, 17) .

8. Door structure according to one of the preceding claims, **characterized in that** the door structure comprises an outer panel for closing the cast component (100) on the outer side thereof.

9. Door structure according to one of the preceding claims, **characterized in that** the door body (1), the window frame (2), the at least one further door element and/or the outer panel are formed from the same cast component (100), so that preferably the door body (1), the window frame (2), the at least one further door element and/or the outer panel form an integral cast component (100) produced by a casting process and/or are not mounted one on the other.

10. Door structure according to one of the preceding claims, **characterized in that** the door body (1), the window frame (2), the at least one further door element and/or the outer panel are produced from an aluminium casting alloy, a magnesium alloy and/or a non-ferrous alloy.

11. Door structure according to one of the preceding claims, **characterized in that** the vehicle door comprises a utility-vehicle door, preferably an omnibus door or a heavy-goods-vehicle door, and/or the door body (1) comprises a cutout for receiving at least one vehicle wheel, wheel arch and/or side attachment part of the vehicle.

12. Casting process for producing a door structure according to one of the preceding claims.

13. Motor vehicle, preferably a utility vehicle, having at least one door structure according to one of Claims 1 to 11.

## Revendications

1. Structure de porte pour une porte de véhicule, avec un corps de porte (1), un cadre de fenêtre (2) et au moins un autre élément de porte, le corps de porte (1), le cadre de fenêtre (2) et l'au moins un autre élément de porte (5) étant réalisés à partir du même composant moulé (100), l'au moins un autre élément de porte comprenant des entretoises de renforcement (3, 4), à savoir une entretoise de renforcement supérieure (3) et une entretoise de renforcement inférieure (4) réalisées du côté du corps de porte, au moins une entretoise de renforcement (3, 4) comprenant au moins une forme d'entretoise réalisée essentiellement en Y ou en V, et l'au moins un autre élément de porte comprenant au moins un appareil de montage (5, 6, 7, 8, 9, 10, 11, 12, 15, 16, 18, 20) pour le montage d'au moins une pièce rapportée,
**caractérisée en ce que**
l'appareil de montage (5) pour le montage d'un rétroviseur arrière est intégré dans l'entretoise de renforcement supérieure (3) ou y est bridé.

2. Structure de porte selon la revendication 1, **caractérisée en ce que** le composant moulé (100) est un composant moulé sous pression, un composant moulé en sable, un composant moulé en lingotière et/ou un composant moulé de précision.

3. Structure de porte selon la revendication 1 ou 2, **caractérisée en ce que** l'au moins un autre élément de porte comprend en outre au moins l'un des éléments suivants :
- l'au moins un appareil de montage (5, 6, 7, 8, 9, 10, 11, 12, 15, 16, 18, 20) pour le montage d'au moins une pièce rapportée, l'appareil de montage étant conçu avec une surface d'appui, une construction de fixation et/ou des nervures de renforcement,
- plusieurs nervures de renforcement (13) intégrées dans un cadre du corps de porte (1),
- plusieurs nervures de renforcement (13) intégrées dans le cadre de fenêtre (2),
- plusieurs nervures de renforcement (14, 17) intégrées dans l'au moins une entretoise de renforcement (3, 4),
- au moins une saillie périphérique et/ou au moins un bourrelet périphérique (19) sur le côté intérieur du composant moulé (100), de préférence pour l'appui défini sur un joint d'étanchéité disposé du côté du véhicule,
- au moins une entretoise pour recevoir un profilé d'étanchéité pour l'étanchéification d'une vitre de fenêtre réglable en hauteur,
- au moins un profilé de guidage de fenêtre,
- au moins une moitié de charnière de porte.

4. Structure de porte selon la revendication 3, **caractérisée en ce que** l'au moins une pièce rapportée comprend un rétroviseur arrière, une charnière de porte, un tendeur de porte supérieur et/ou inférieur, un support de groupe, un prolongement de porte, un miroir orienté vers le bas et/ou un profilé de guidage de fenêtre.

5. Structure de porte selon l'une quelconque des revendications précédentes, **caractérisée en ce qu'**au moins une entretoise de renforcement (3, 4) est orientée essentiellement horizontalement.

6. Structure de porte selon l'une quelconque des revendications précédentes, **caractérisée en ce que** le composant moulé (100) constitue une tôle intérieure pour la porte de véhicule.

7. Structure de porte selon l'une quelconque des revendications précédentes, **caractérisée en ce que** le corps de porte (1), le cadre de fenêtre (2) et/ou au moins une entretoise de renforcement (3, 4) présentent une section transversale essentiellement en forme de U, de chapeau ou d'oméga, de préférence avec des nervures de renforcement (13, 14, 17) s'étendant à l'intérieur.

8. Structure de porte selon l'une quelconque des revendications précédentes, **caractérisée en ce que** la structure de porte comprend une tôle extérieure pour fermer le composant moulé (100) sur son côté extérieur.

9. Structure de porte selon l'une quelconque des revendications précédentes, **caractérisée en ce que** le corps de porte (1), le cadre de fenêtre (2), l'au moins un autre élément de porte et/ou la tôle extérieure sont réalisés à partir du même composant moulé (100), de telle sorte que, de préférence, le corps de porte (1), le cadre de fenêtre (2), l'au moins un autre élément de porte et/ou la tôle extérieure forment un composant moulé monobloc (100) fabriqué par un procédé de moulage et/ou ne sont pas montés les uns sur les autres.

10. Structure de porte selon l'une quelconque des revendications précédentes, **caractérisée en ce que** le corps de porte (1), le cadre de fenêtre (2), l'au moins un autre élément de porte et/ou la tôle extérieure sont fabriqués à partir d'un alliage d'aluminium coulé, d'un alliage de magnésium et/ou d'un alliage non ferreux.

11. Structure de porte selon l'une quelconque des revendications précédentes, **caractérisée en ce que** la porte de véhicule comprend une porte de véhicule utilitaire, de préférence une porte d'autobus ou de camion, et/ou le corps de porte (1) comprend une découpe pour recevoir au moins une roue de véhicule, un passage de roue et/ou un composant latéral du véhicule.

12. Procédé de moulage pour la fabrication d'une structure de porte selon l'une quelconque des revendications précédentes.

13. Véhicule automobile, de préférence véhicule utilitaire, avec au moins une structure de porte selon l'une quelconque des revendications 1 à 11.
